# EUROPEAN PATENT SPECIFICATION

(11) **EP 0 474 120 B1**
(45) Date of publication and mention of the grant of the patent: **07.11.2001**
(21) Application number: 91114549.8
(22) Date of filing: 29.08.1991
(51) Int. Cl.: G06F 17/60

(54) **Knowledge data assimilation method and system**
Verfahren und Gerät zur Aufnahme von Wissensdaten
Dispositif et méthode pour l'acquisition du savoir

(30) Priority: 29.08.1990 JP 22504490
(43) Date of publication of application: 11.03.1992
(73) Proprietor: Hitachi, Ltd., Chiyoda-ku, Tokyo 101 (JP)
(72) Inventor: Tsuruta, Setsuo, Machida-shi, Tokyo 194 (JP); Eguchi, Toshihiro, Kawasaki-shi, Kanagawa-ken 215 (JP); Matsumoto, Kuniaki, Koutou-ku, Tokyo 136 (JP); Oshima, Toshiya, Katsuta-shi, Ibaraki-ken 312 (JP)
(74) Representative: Strehl Schübel-Hopf & Partner

(56) References cited:
- EP-A- 0 193 207
- PATENT ABSTRACTS OF JAPAN vol. 14, no. 460 (M-1032)17 July 1990
- PROCEEDINGS OF THE ITERNATIONAL WORKSHOP ON ARTIFICIAL INTELLIGENCE FOR INDUSTRIAL APPLICATIONS, IEEE CAT. NO. 88CH2529-6, 27 May 1988, HITACHI CITY, JAPAN pages 490 - 495 TSURUTA, MATSUMOTO 'A KNOWLEDGE-BASED INTERACTIVE TRAIN SCHEDULING SYSTEM AIMING AT LARGE-SCALE COMPLEX PLANNING EXPERT SYSTEMS'
- REVUE GENERALE DES CHEMINS DE FER vol. 108, no. 6, June 1989, pages 29 - 36 MOULIN 'La gestion prévisionnelle du trafic à la gare de l'Est: le système expert GESPI'

## Description

### BACKGROUND OF INVENTION

### FIELD OF THE INVENTION

The present invention relates to an assimilation method and an assimilation system for knowledge data to solve prediction problems, planning problems, replanning problems and especially to an assimilation method and an assimilation system for knowledge data regarding the train traffic regulation system for replanning against train disorders, train traffic prediction system and transportation schedule generation system and travelling plan generation system for maintenance and service personnels and man allocation system etc.

### DESCRIPTION OF THE PRIOR ART

The conventional system has a knowledge extraction support function without the function to incorporate, realise and verify the extracted knowledge, as discussed in the knowledge extraction support system RUSSY (Proceedings on Railway Cybernetics, 1984; pages 139-143) for train traffic regulation. This cited technique has no function to assimilate the extracted knowledge for adaptation, and has a problem in that the problem solving system storing with the knowledge has been producing unsatisfactory solutions of low precision.

From EPA 0 193 207 a transit schedule generating technique for a transport system such as a train or an airplane is known which is based on pre-stored knowledge. GB-A 2 182 527 further discloses a traffic system operating control device for reducing a passenger ratio between trains wherein a demand is predicted from knowledge established between a daily-changing environment condition and a change in a demand. From Processing Of The International Workshop On Artificial Intelligence For Industrial Applications, IEEE CAT. No. 88CH2529-6, 27 May 1988, pages 490 to 495, a knowledge-based interactive train scheduling technique based on hierarchized complex knowledge is known.

Revue Generale Des Chemins De Fer, Vol. 108, No. 6, June 1989, pages 29 to 36, discloses a technique of checking conflicts in a train scheduling plan based on frame oriented knowledge wherein train conflict problems are solved by using a rule base knowledge.

### SUMMARY OF THE INVENTION

An object of the present invention is to provide satisfactory solution having high adaptability to change, inactive and/or delete the values and contents of the knowledge data stored in a system for prediction problem solution.

Another object of the present invention is to ensure the assimilation for satisfactory adaptation occurring within a reasonably short period of time.

This object is met by the independent claims. Preferred embodiments are disclosed in the dependent claims.

According to the present invention a problem solving knowledge data assimilation method using an information processing device consisting of a processor, a storage device and an input/output device are provided with the function ① generation of an assimilation plan based on the knowledge data stored in advance for solution of the problem, ② evaluation of the generated assimilation plan in conformity to an evaluation knowledge stored in advance, ③ determination of a satisfactory assimilation plan based on the result of the said evaluation, and ④ change of the knowledge data stored in advance according to the satisfactory assimilation plan.

According to the present invention the satisfactory assimilation plan is achieved ① by supplying the storage device with the knowledge and data for assimilation, ② by generating the assimilation plan by use of said knowledge and data, ③ by evaluating the generated assimilation plan, and ④ by repeating the said procedures until the satisfactory assimilation plan is obtained.

According to the present invention a man-machine interactive function permits user's set-up and change of the said assimilation condition plan. For an automatic change of the assimilation condition plan and for an automatic generation of the guidance, the storage device according to the present invention stores the knowledge and proposes an alternative plan of assimilation condition and the data on normally reasonable changeable range etc. According to the invention it is possible to repeat, as many times as required, the man-machine interactive modification (alteration) of the assimilation plan and its evaluation.

The present invention has the following functions and behaviours:

Based on the current status such as prediction error information, for example, an assimilation plan inference function generates the assimilation candidate list by using the knowledge and the data stored in the storage device for analysing the error information, and for inferring assimilation items or assimilation values. Then, out of these assimilation candidates, the one whose assimilation items and values meet the specified assimilation conditions and are consistent with each other is selected and edited as an assimilation plan, thus ensuring generation of the satisfactory assimilation plan.

An alternative (or modified) plan of assimilation condition is generated by integrated use of data such as the knowledge for changing the assimilation condition, data such as the permissible change range and data such as the degree of alteration request for the alternative candidate of assimilation condition, thereby ensuring the alternative plan to be reasonable.

The foregoing and other objects, advantages, manner of operation and novel features of the present invention will be understood from the following detailed description when read in connection with the accompanying drawings.

### BRIEF DESCRIPTION OF THE DRAWINGS

In the accompanying drawings:
FIG. 1 is an overall block diagram representing an embodiment of this invention;
FIG 2 is a flowchart representing the procedures in the assimilation processor;
FIG 3 is a flowchart representing the detailed procedures in the assimilation proposal inference block; and
FIG 4 is a block diagram representing the assimilation data.

### DETAILED DESCRIPTION OF THE PREFERRED EMBODIMENT

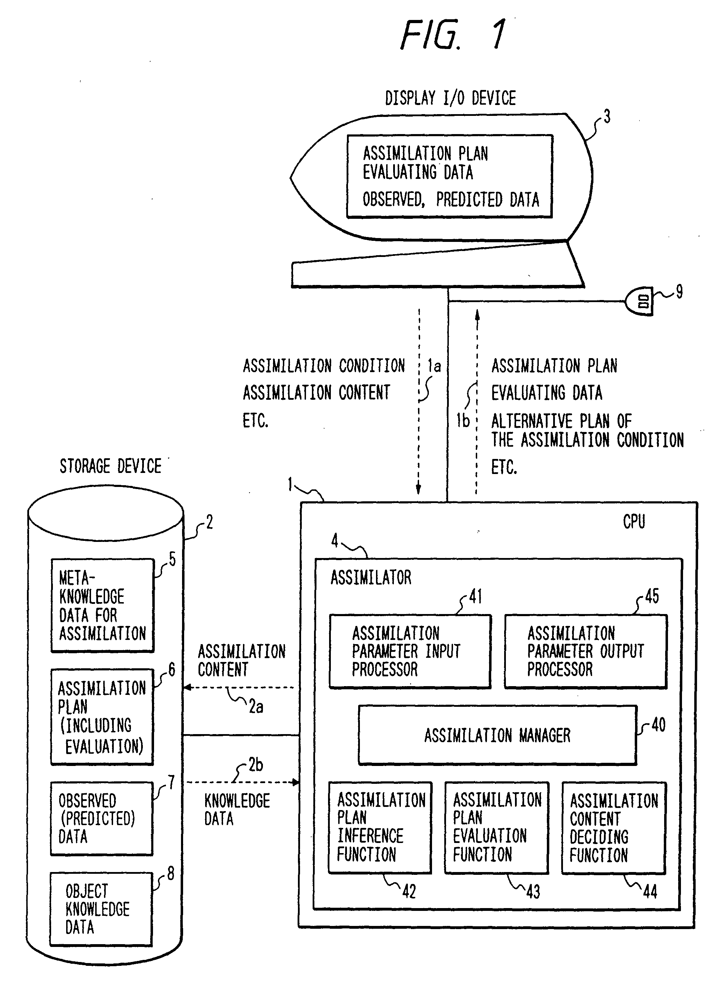

The first embodiment of this invention will be described with reference to FIG 1.

FIG 1 is an overall block diagram.

The system as an embodiment of this invention comprises
CPU 1 including an assimilation processor 4 which is used to assimilate the knowledge and data for solving the object problems (for example, the train traffic prediction problem, or the problem to recover from a train disorder);
a storage device 2 which includes an assimilation plan 6, meta-knowledge data for assimilation 5 for its generation and evaluation, object knowledge data 8 and observed data 7 (and predicted data, depending on particular cases); and
a display input device 3 which displays and inputs the data regarding assimilation conditions and assimilation contents.

These will be described with reference to concrete examples: the above assimilation plan 6 is something as "the uptrain speed is slightly increased during the overcrowded rush hour time from 7:30 to 8:00 at a particular station." The observed (predicted) data 7 includes delay time and stoppage time, and the object knowledge data 8 includes knowledge on leaving velocity and loading velocity (relationship to congestion rate) and such knowledge as "the leaving velocity is high at the terminal station even when the train is crowded."

The meta-knowledge data for assimilation 5 is based on rules, for example:
If the delayed time for stoppage at the station is generally overestimated,
and the overall assimilation to the number of the loading and the leaving passengers is sufficient,
then the overall assimilation plan for the loading and leaving velocity of the carriages is great.

If the delayed time for stoppage at the passengers maldistribution station is extremely underestimated
and the time zone for evaluating the delay at such a station corresponds to morning rush hour,
then the assimilation plan for passenger maldistribution rate at the passenger maldistribution station which is poorly evaluated for the delay is considerably great.

The assimilation conditions for this case will include the time zone of 7:30 to 9.00 or morning rush hour at the object station, the direction for up/down-train, destination of the train, permissible assimilation range within 10 percent, etc.

The assimilation processor 4 comprises
an assimilation parameter input processor 41 which serves to enter the assimilation contents including assimilation range and assimilation conditions;
an assimilation output processor 45 which serves to display and output the assimilation plan, the evaluation data and the alternative plan of assimilation condition;
an assimilation plan evaluation function 43;
an assimilation plan inference function 42 which gives the assimilation plan (alternative plan) and the assimilation condition change plan according to the evaluation result;
an assimilation content deciding function 44 which sets up the assimilation content at the time specified by the operator (human operator, user, etc.); and
an assimilation manager 40 which controls the sequence of executing the above functions 41 to 45 as well as the data transfer.

The assimilation condition and assimilation content set by the operator are transmitted from display input device 3 to the assimilation processor 4 of CPU 1.

An assimilation plan is given in conformity to the assimilation condition and is transferred to the display/input device (1b), together with the evaluation data (and the alternative plan of the assimilation condition in some cases) where it is displayed. The assimilation content set by the operator and transferred to CPU 1 via the display/input device 3 is further sent to the storage device 2 (2a), wherein the knowledge and data are changed or added according to the assimilation content. The knowledge and data in the storage device 2 are sent to CPU 1 (2b) to be used to solve the object problem or the assimilation processing. To input information into the assimilation processor 1, a mouse 9 can be used for the input device.

This will permit entering the data of the time zone, station, train, etc. directly onto the graphic form by picking up the column representing time band, the line representing the station or "suji" which is a sort of line representing the train running trajectory.

In this way, it is possible to initialise and change the assimilation condition by the system.

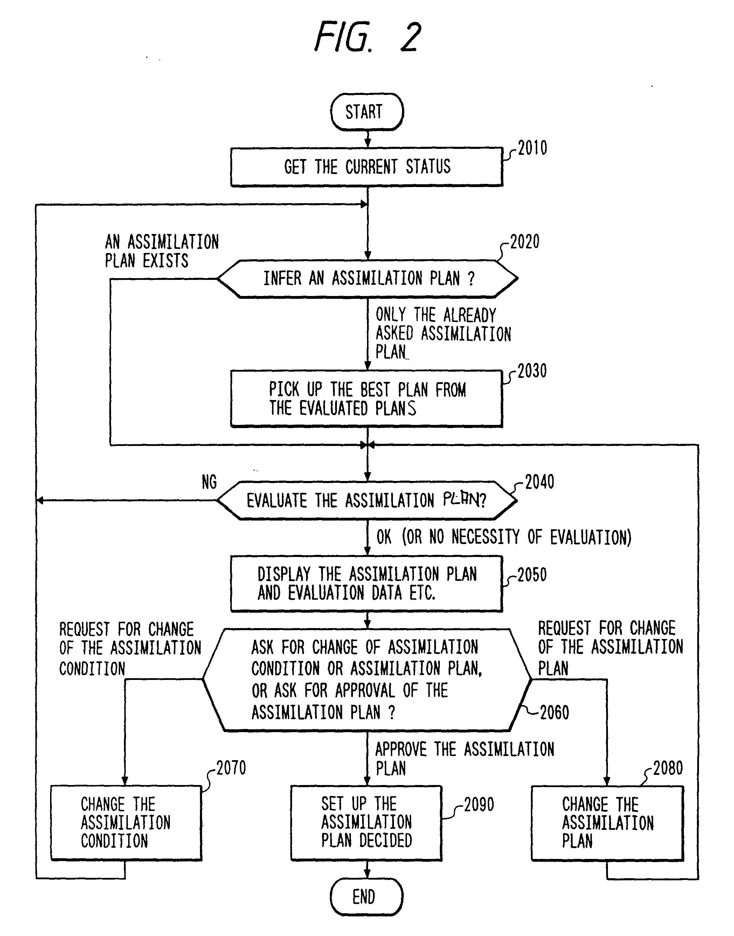

FIG 2 represents the main processing flow for assignment. Firstly, current status required for assignment processing are set in block 2010; these current status include the discrepancy of the prediction (for example, delay of leaving time, loading time and stoppage time), errors for each item, and error status (overall deviation or partial deviation).

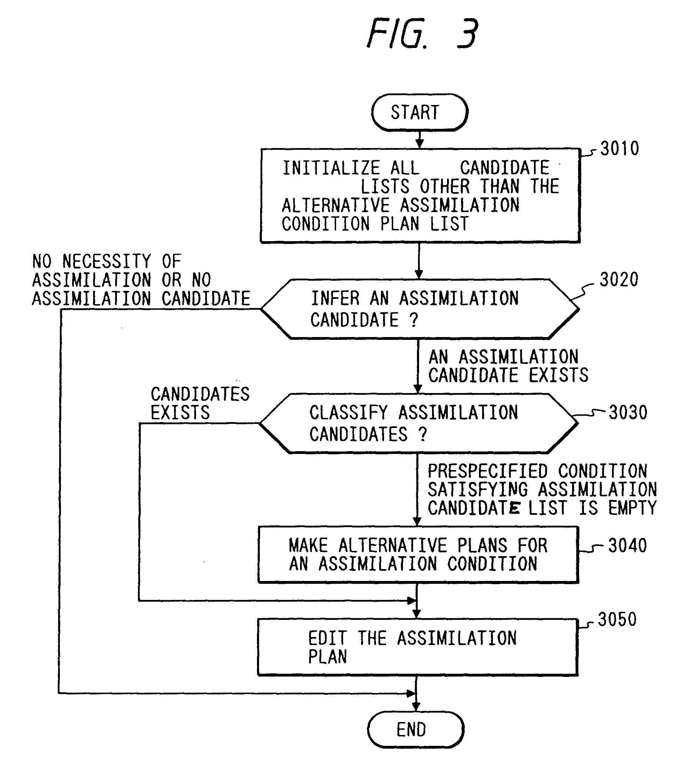

Next, the assimilation plan is inferred as will be described in detail with reference to block 2020 and FIG 3. The proposal is directly processed in Block 2040 if there is any assimilation plan that satisfies the assimilation condition.

If there is no such assimilation plan, the plan evaluated as the best out of the assimilation plans already evaluated is picked up as the assimilation proposal in block 2030 and is processed in block 2040 as requiring no evaluation.

The unevaluated assimilation plan is subjected to the assimilation plan evaluation processing in block 2040. If the result of evaluation is negative (NG), it will be returned to the block 2020, and another alternative will be inferred. If the result is positive (OK) or "evaluation not required", block 2050 will display the assimilation plan, the evaluation data and the alternative plan of the assimilation condition.

Next, change of the assimilation condition, or the assimilation plan or approval for the assimilation plan are input in block 2060. If the request for change of the assimilation condition is input, the assimilation condition will be changed in block 2070, and is sent back to block 2020. If the request for change of the assimilation plan is input, the assimilation plan will be changed in block 2080 and will be sent back to block 2040. If approval for the assimilation plan is input, the assimilation plan will be set (block 2090), thereby terminating the assimilation processing. The assimilation plan, the request for change of the assimilation condition and the evaluation data can be integrated into a set and displayed as one screen on a multi-window screen.

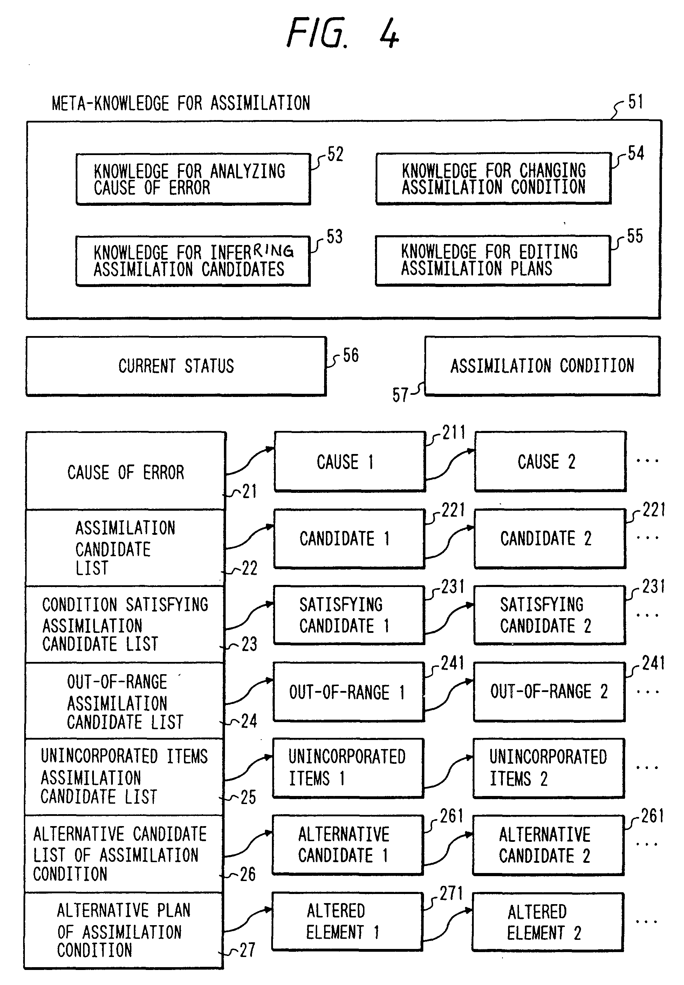

FIG 4 is a block diagram representing the meta-knowledge and data for assimilation.

Firstly, a meta-knowledge for assimilation 51 is used to infer the assimilation plan 6 and edit it, and to infer an adequate plan to change an assimilation condition 57. It comprises knowledge for analysing a cause of error 52, a knowledge for inferring assimilation candidates 53, a knowledge for changing an assimilation condition 54 and a knowledge for editing an assimilation plan 55.

The data for assimilation includes a current status 56, the assimilation condition 57, a cause for error (list) 21 (its element: 211), an assimilation candidate list 22 (its element: assimilation candidate 221), a condition satisfying assimilation candidate list 23 (its element: 231), an out-of-range assimilation candidate list 24 (its element: 241) where the assimilation value is outside the range an out-of-items assimilation candidate list 25 (its element: 251) which is the assimilation candidate for the items outside the assimilation condition, an alternative candidate list of assimilation condition 26 (its element: 261) and an alternative plan of assimilation condition 27 (its element: 271). To give an example, if the above assimilation items correspond to the number of passengers at the main stations on the Yamanote Line in Tokyo (Tokyo, Shinagawa, Shibuya, Shinjuku and Ikebukuro), the data outside (unincorporated) the above items correspond to the number of passengers at other stations on the Yamanote Line.

FIG 3 is a flowchart of the assimilation plan inference (Block 2020 in FIG 2) of the assimilation plan inference function 42 in FIG 1.

Firstly, block 3010 initialises all the candidate lists, excepting the alternative candidate list of assimilation condition 26.

Next, block 3020 infers the assimilation candidate 221. That is, the cause for error 21 is inferred by the production rule, etc. from the current status 56 and knowledge for analysing cause of error 52.

Furthermore, the assimilation candidate 221 is likewise inferred from the cause for error 21 and the knowledge for inferring assimilation candidates 53. If the assimilation candidate list 22 is empty, processing is terminated; if not, block 3030 classifies the assimilation candidates. That is, the assimilation candidates satisfying assimilation condition 57 are put into the condition satisfying assimilation candidate list 23, those not included in the assimilation items are put into the unincorporated items assimilation candidate list 25, and those assimilation values being outside the values specified by the assimilation condition 57 are put into the out-of-range assimilation candidate list 24. If the condition satisfying assimilation candidate list 23 is not empty, an assimilation plan edit processing is performed in block 3050 directly; if the list 23 is empty, the edit processing is performed after processing in block 3040.

Block 3040 generates a proposal for a change of the assimilation condition. That is, the assimilation candidates given in the unincorporated items assimilation candidate list 25 and the out-of-range assimilation candidate list 24 are transformed according to the knowledge for changing assimilation condition 54, and the results are added to the alternative candidate list of assimilation condition 26. For example, if the assimilation item names in the alternative candidate list of assimilation condition 26 are the same as said assimilation candidates, the system counts up the number of requests for change in the corresponding alternative candidate 26. When the assimilation plan and the alternative plan of assimilation condition should be changed or cancelled, the items which are frequently subjected to request for change or cancellation are excluded from the assimilation item list, or are assigned with lower priority in the list, for example.

Furthermore, the out-of-range assimilation candidate 241 given in the out-of-range assimilation candidate list 24 is counted up by the upper limit number of requests for change (in case of the assimilation candidate exceeding the maximum value of assimilation condition), or the lower limit number or requests for change (in the case of the assimilation candidate below the minimum value of assimilation condition). The number of candidates from the alternative candidate list of assimilation condition 26, according to knowledge for changing assimilation condition 54 is reduced and an alternative plan of assimilation condition 27 is created.

In addition to the above, as examples of the knowledge for changing the assimilation condition 54, the following cases are possible; if the number of requests for change is greater than the specified value or if the (number of requests for change + number of request for upper limit change x upper limit change value + number of requests for lower limit change x lower limit change value) is greater than the specified value, the system accepts such request for change.

Block 3050 edits the assimilation candidates to give the assimilation plan. That is, if the condition satisfying assimilation candidate list 23 is not empty, the assimilation candidate 231 is picked up to be the assimilation plan. However, if there are two assimilation candidates having the same items among the assimilation plans 6, and if their assimilation contents contradict with each other, then one of the two will be selected according to the knowledge for editing assimilation plan 55. As examples of the knowledge for editing assimilation plan 55, the following cases are possible; if one of the assimilation candidates requests assimilation in the direction of increase whereas the other requests is in the direction of decrease, then the assimilation value of said item will be the maximum value, minimum value or simple average value (or average value including both directions for increase and decrease) of the assimilation values of the assimilation candidates in which the number of the assimilation candidates having the same item and same direction are greater than in the condition satisfying assimilation candidate list 23.

If the condition satisfying assimilation candidate list 23 is empty, the assimilation candidates satisfying the assimilation condition for the alternative plan of assimilation condition 27 are picked up from the unincorporated items assimilation candidate list 25 and the out-of-range assimilation candidate list 24, and are entered into the condition satisfying assimilation candidate list 23, to be subjected to the said edit processing.

The present invention provides an automatic proposal of the assimilation plan of the knowledge data for the problem solving system according to the specified conditions, so it is possible to ensure quick and accurate assimilation of the complicated knowledge and data of the problem solving system, including train traffic prediction and replanning against train disorder. This advantage of the present invention permits easy creation of a high-precision, highly reliable train traffic prediction system and replanning system against train disorder.

## Claims

1. A method for obtaining a satisfactory assimilation plan to change knowledge so that at least one of prediction problems, planning problems and replanning problems is solved, said method being employed on an information system having at least a processor (1) and storage means (2), and comprising the steps of:
getting (2010) and storing in said storage means a current status (56) including a prediction error information;
inferring by means of said processor and storing in said storage means a list of assimilation candidates on the basis of meta-knowledge (51) stored in said storage means, said meta-knowledge including specifications of conditions for said assimilation candidates, and on the basis of the current status; and
evaluating by means of said processor said inferred assimilation candidates list on the basis of the pre-stored assimilation conditions (57) to determine assimilation candidates of said assimilation candidate list whose assimilation items and values meet said assimilation conditions so that an assimilation plan is obtained;
wherein said steps of inferring and evaluating are repeated until said satisfactory assimilation plan is obtained.

2. The method according to claim 1, wherein said inferring step further comprises a step of changing the pre-stored assimilation conditions (57) by inferring alternative assimilation conditions if none of the assimilation candidates for the assimilation plan satisfies the pre-stored assimilation conditions.

3. The method according to claim 1 or 2, comprising the further steps of
displaying (2050) the inferred assimilation plan and the evaluation data; and
continuing (2060, 2070, 2080, 2090) with said steps of inferring and evaluating in response to a request for changing the assimilation plan and/or the pre-stored assimilation conditions, wherein the steps of inferring and evaluating are repeated until said satisfactory assimilation plan is obtained.

4. The method according to claim 3, wherein
when a request (2080) to change the assimilation plan is inputted, the method continues with the evaluating step; and
when a request (2070) to change the pre-stored assimilation conditions or the inferred alternative assimilation conditions is inputted, the method continues with the inferring step.

5. The method according to any of claims 1 to 4, wherein said meta-knowledge for assimilation (51) includes
a knowledge (52) for analysing a cause of error;
a knowledge (53) for inferring assimilation candidates;
a knowledge (54) for changing assimilation conditions, when none of the inferred assimilation candidates satisfies the pre-stored assimilation conditions; and
a knowledge (55) for editing an assimilation plan.

6. The method according to claim 5, wherein said inferring step includes the steps of
initialising (3010) an assimilation candidate list (22), a condition satisfying assimilation candidate list (23), an out-of-range assimilation candidate list (24) and an unincorporated items assimilation candidate list (25);
inferring (3020) assimilation candidates to be queued into the assimilation candidate list (22) on the basis of the current status (56), the knowledge (52) for analysing a cause of error and the knowledge (53) for inferring assimilation candidates;
classifying (3030) the inferred assimilation candidates including the steps of assigning assimilation candidates which satisfy the assimilation conditions (57) to the condition satisfying assimilation candidate list (23), assigning assimilation candidates which are not included in the object knowledge of the assimilation conditions to the unincorporated items assimilation candidate list (25) and assigning assimilation candidates which have assimilation values being outside the range specified by the assimilation conditions (57) to the out-of-range assimilation candidate list (24);
changing (3040) the assimilation conditions on the basis of said unincorporated assimilation candidate list (25) and said out-of-range assimilation candidate list (24), if the condition satisfying assimilation candidate list (23) is empty; and
editing (3050) the assimilation plan on the basis of the condition satisfying assimilation candidate list (57).

7. The method according to claim 6, wherein when the condition satisfying assimilation candidate list (23) includes two assimilation candidates, the editing step (3050) comprises a step of selecting one of these assimilation candidates on the basis of the knowledge (55) for editing an assimilation plan.

8. The method according to claim 6 or 7, wherein said inferring step further includes the steps of inferring (3040), when none of the assimilation candidates satisfies the assimilation conditions (57), assimilation candidates from said unincorporated items assimilation candidate list (25) and the out-of-range assimilation candidate list (24) on the basis of the knowledge (54) for changing assimilation conditions, classifying the inferred assimilation candidates to an alternative candidate list of assimilation conditions (26) and creating an alternative plan of assimilation conditions (27) on the basis of the alternative candidate list of assimilation conditions.

9. The method according to any of claims 1 to 8, relating to a prediction of a train traffic control wherein said current status represents a status of an actual record of a train running trajectory.

10. An assimilation system for obtaining a satisfactory assimilation plan to change object knowledge so that at least one of prediction problems, planning problems, and replanning problems is solved, comprising a storage means (2) and an assimilation processor (4), said assimilation processor including
means (40, 41) for getting and storing in said storage means, a current status (56) including a prediction error information;
means (40, 42) for inferring and storing in said storage means a list of assimilation candidates on the basis of meta-knowledge (51) stored in said storage means, said meta-knowledge including specifications of conditions for said object knowledge and on the basis of the current status; and
means (40, 43) for evaluating said inferred assimilation candidate list on the basis of pre-stored assimilation conditions (57) to determine assimilation candidates of said assimilation candidate list whose assimilation items and values meet said assimilation conditions so that an assimilation plan is obtained;
wherein said means of inferring and evaluating are repeating their proceedings until said satisfactory assimilation plan is obtained.

11. The system according to claim 10, wherein said inferring means (40, 42) further comprises means for inferring an alternative assimilation plan by changing the pre-stored assimilation conditions to infer alternative assimilation conditions if none of the assimilation candidates for the assimilation plan satisfies the assimilation conditions.

## Patentansprüche

1. Verfahren zum Erhalten eines zufriedenstellenden Assimilationsplans, um Wissen so zu ändern, daß wenigstens einer der Problemkreise Voraussageprobleme, Planungsprobleme und Umplanungsprobleme gelöst wird, wobei dieses Verfahren in einem Informationssystem mit wenigstens einem Prozessor (1) und einer Speichereinrichtung (2) verwendet wird, und dabei:
ein gegenwärtiger Status (56) einschließlich einer Voraussage-Fehlerinformation erhalten (2010) und in der Speichereinrichtung gespeichert wird;
eine Liste von Assimilationskandidaten auf Grundlage von in der Speichereinrichtung gespeichertem Meta-Wissen (51), das Bedingungsspezifikationen für die Assimilationskandidaten einschließt, sowie auf Grundlage des gegenwärtigen Status mittels des Prozessors durch Inferez abgeleitet und in der Speichereinrichtung gespeichert wird; und
die abgeleitete Assimilationskandidatenliste auf Grundlage der zuvor gespeicherten Assimilationsbedingungen (57) mittels des Prozessors ausgewertet wird, um aus dieser Liste Assimilationskandidaten zu bestimmen, deren Assimilationspunkte und Werte die Assimilationsbedingungen so erfüllen, daß ein Assimilationsplan erhalten wird;
wobei die Ableitung und die Auswertung solange wiederholt werden, bis ein zufriedenstellender Assimilationsplan erhalten wird.

2. Verfahren nach Anspruch 1, wobei bei der Ableitung außerdem die zuvor gespeicherten Assimilationsbedingungen (57) durch Ableiten alternativer Assimilationsbedingungen geändert werden, falls keiner der Assimilationskandidaten für den Assimilationsplan die zuvor gespeicherten Assimilationsbedingungen erfüllt.

3. Verfahren nach Anspruch 1 oder 2, wobei außerdem
der abgeleitete Assimilationsplan und die Auswertedaten wiedergegeben werden (2050); und
die Ableitung und Auswertung in Reaktion auf eine Anfrage zur Änderung des Assimilationsplans und/oder der zuvor gespeicherten Assimilationsbedingungen fortgesetzt werden (2060, 2070, 2080, 2090), wobei die Ableitung und Auswertung solange wiederholt werden, bis der zufriedenstellende Assimilationsplan erhalten wird.

4. Verfahren nach Anspruch 3, wobei
das Verfahren mit der Auswertung fortgesetzt wird, wenn eine Anfrage (2080) zur Änderung des Assimilationsplans eingegeben wird; und
das Verfahren mit der Ableitung fortgesetzt wird, wenn eine Anfrage (2070) zur Änderung der zuvor gespeicherten Assimilationsbedingungen oder der abgeleiteten, alternativen Assimilationsbedingungen eingegeben wird.

5. Verfahren nach einem der Ansprüche 1 bis 4, wobei das Meta-Wissen zur Assimilation (51) einschließt:
Wissen (52) zur Analyse einer Fehlerursache;
Wissen (53) zum Ableiten von Assimilationskandidaten;
Wissen (54) zum Ändern der Assimilationsbedingungen, wenn keiner der abgeleiteten Assimilationskandidaten die zuvor gespeicherten Assimilationsbedingungen erfüllt; und
Wissen (55) zum Editieren des Assimilationsplans.

6. Verfahren nach Anspruch 5, wobei bei der Ableitung außerdem
eine Assimilationskandidatenliste (22), eine Bedingungerfüllend-Assimilationskandidatenliste (23), eine Außerhalb-Bereich-Assimilationskandidatenliste (24) und eine Nicht-enthaltene-Punkte-Assimilationskandidatenliste (25) initialisiert (3010) werden;
Assimilationskandidaten zum Einreihen in die Assimilationskandidatenliste (22) auf Grundlage des gegenwärtigen Status (56), des Wissens (52) zur Analyse einer Fehlerursache und des Wissens (53) zum Ableiten der Assimilationskandidaten abgeleitet werden (3020);
die abgeleiteten Assimilationskandidaten klassifiziert werden (3030), wobei Assimilationskandidaten, die die Assimilationsbedingungen (57) erfüllen, der Bedingung-erfüllend-Assimilationskandidatenliste (23), Assimilationskandidaten, die nicht im Objektwissen der Assimilationsbedingungen enthalten sind, der Nicht-enthaltene-Punkte-Assimilationskandidatenliste (25) und Assimilationskandidaten, die Assimilationswerte außerhalb des durch die Assimilationsbedingungen (57) bezeichneten Wertebereichs aufweisen, der Außerhalb-Bereich-Assimilationskandidatenliste (24) zugeordnet werden;
die Assimilationsbedingungen auf Grundlage der Nichtenthaltene-Punkte-Assimilationskandidatenliste (25) und der Außerhalb-Bereich-Assimilationskandidatenliste (24) geändert werden (3040), falls die Bedingung-erfüllend-Assimilationskandidatenliste (23) leer ist; und
der Assimilationsplan auf Grundlage der Bedingung-erfüllend-Assimilationskandidatenliste (57) editiert wird (3050).

7. Verfahren nach Anspruch 6, wobei bei der Editierung (3050) einer der Assimilationskandidaten auf Grundlage des Wissens (55) zum Editieren des Assimilationsplans ausgewählt wird, wenn die Bedingung-erfüllend-Assimilationskandidatenliste (23) zwei Assimilationskandidaten enthält.

8. Verfahren nach Anspruch 6 oder 7, wobei bei der Ableitung außerdem Assimilationskandidaten von der Nicht-enthaltene-Punkte-Assimilationskandidatenliste (25) und der Außerhalb-Bereich-Assimilationskandidatenliste (24) auf Grundlage des Wissens (54) zum Ändern der Assimilationsbedingungen abgeleitet, die abgeleiteten Assimilationskandidaten in eine alternative Kandidatenliste der Assimilationsbedingungen (26) klassifiziert und ein alternativer Plan von Assimilationsbedingungen (27) auf Grundlage der alternativen Kandidatenliste von Assimilationsbedingungen geschaffen werden, wenn keiner der Assimilationskandidaten die Assimilationsbedingungen (57) erfüllt.

9. Verfahren nach einem der Ansprüche 1 bis 8, angewandt auf die Vorhersage einer Zugverkehrssteuerung, wobei der gegenwärtige Status dem Status einer aktuellen Aufzeichnung der Fahrspur eines Zuges entspricht.

10. Assimilationssystem zum Erhalten eines zufriedenstellenden Assimilationsplans zum Ändern von Objektwissen, so daß wenigstens einer der Problemkreise Vorhersageprobleme, Planungsprobleme und Umplanungsprobleme gelöst wird, umfassend eine Speichereinrichtung (2) und einen Assimilationsprozessor (4) mit
einer Einrichtung (40, 41) zum Erhalten eines gegenwärtigen Status (56) einschließlich einer Vorhersage-Fehlerinformation und zum Speichern desselben in der Speichereinrichtung;
einer Einrichtung (40, 42) zum Ableiten einer Assimilationskandidatenliste auf Grundlage von in der Speichereinrichtung gespeichertem Meta-Wissen (51), das Bedingungsspezifikationen für das Objektwissen einschließt, sowie auf Grundlage des gegenwärtigen Status, und zum Speichern in der Speichereinrichtung; und
einer Einrichtung (40, 43) zum Auswerten der abgeleiteten Assimilationskandidatenliste auf Grundlage von zuvor gespeicherten Assimilationsbedingungen (57), um Assimilationskandidaten aus der Assimilationskandidatenliste zu ermitteln, deren Assimilationspunkte und Werte die Assimilationsbedingungen so erfüllen, daß ein Assimilationsplan erhalten wird;
wobei die Einrichtungen zum Ableiten und Auswerten ihre Handlungen solange wiederholen, bis der zufriedenstellende Assimilationsplan erhalten wird.

11. System nach Anspruch 10, wobei die Ableiteeinrichtung (40, 42) außerdem eine Einrichtung zum Ableiten eines alternativen Assimilationsplans durch Ändern der zuvor gespeicherten Assimilationsbedingungen enthält, um alternative Assimilationsbedingungen zu erhalten, wenn keiner der Assimilationskandidaten für den Assimilationsplan die Assimilationsbedingungen erfüllt.

## Revendications

1. Procédé pour obtenir un plan d'acquisition satisfaisant afin de modifier des connaissances de manière à résoudre au moins un problème parmi des problèmes de prédiction, des problèmes de planification et des problèmes de replanification, ledit procédé étant utilisé dans une système d'informations ayant au moins un processeur (1) et des moyens de mémorisation (2), et comportant les étapes consistant à :
obtenir (2010) et mémoriser dans lesdits moyens de mémorisation un état courant (56) incluant des informations d'erreur de prédiction,
déduire à l'aide dudit processeur et mémoriser dans lesdits moyens de mémorisation une liste de candidats d'acquisition sur la base de méta-connaissances (51) mémorisées dans lesdits moyens de mémorisation, lesdites méta-connaissances incluant des spécifications de conditions concernant lesdits candidats d'acquisition, et sur la base de l'état courant, et
évaluer à l'aide dudit processeur ladite liste de candidats d'acquisition déduite sur la base des conditions d'acquisition préalablement mémorisées (57) pour déterminer des candidats d'acquisition de ladite liste de candidats d'acquisition dont les éléments et les valeurs d'acquisition satisfont auxdites conditions d'acquisition de sorte qu'un plan d'acquisition est obtenu,
lesdites étapes de déduction et d'évaluation étant répétées jusqu'à ce que ledit plan d'acquisition satisfaisant soit obtenu.

2. Procédé selon la revendication 1, dans lequel ladite étape de déduction comporte en outre une étape consistant à modifier les conditions d'acquisition préalablement mémorisées (57) en déduisant des conditions d'acquisition alternatives si aucun des candidats d'acquisition du plan d'acquisition ne satisfait aux conditions d'acquisition préalablement mémorisées.

3. Procédé selon la revendication 1 ou 2, comportant les étapes supplémentaires consistant à :
afficher (2050) le plan d'acquisition déduit et les données d'évaluation, et
poursuivre (2060, 2070, 2080, 2090) lesdites étapes de déduction et d'évaluation en réponse à une demande destinée à modifier le plan d'acquisition et/ou les conditions d'acquisition préalablement mémorisées, les étapes de déduction et d'évaluation étant répétées jusqu'à ce que ledit plan d'acquisition satisfaisant soit obtenu.

4. Procédé selon la revendication 3, dans lequel
lorsqu'une demande (2080) destinée à modifier le plan d'acquisition est délivrée en entrée, le procédé poursuit l'étape d'évaluation, et
lorsqu'une demande (2070) destinée à modifier les conditions d'acquisition préalablement mémorisées ou les conditions d'acquisition alternatives déduites est délivrée en entrée, le procédé poursuit l'étape de déduction.

5. Procédé selon l'une quelconque des revendications 1 à 4, dans lequel lesdites méta-connaissances pour l'acquisition (51) incluent
des connaissances (52) destinées à analyser une cause d'erreur,
des connaissances (53) destinées à déduire des candidats d'acquisition,
des connaissances (54) destinées à modifier des conditions d'acquisition, lorsque aucun des candidats d'acquisition déduits ne satisfait aux conditions d'acquisition préalablement mémorisées, et
des connaissances (55) destinées à éditer un plan d'acquisition.

6. Procédé selon la revendication 5, dans lequel ladite étape de déduction inclut les étapes consistant à
initialiser (3010) une liste de candidats d'acquisition (22), une liste de candidats d'acquisition satisfaisant à des conditions (23), une liste de candidats d'acquisition se trouvant à l'extérieur d'une plage (24) et une liste de candidats d'acquisition d'éléments non-incorporés (25),
déduire (3020) des candidats d'acquisition destinés à être agencées en file d'attente dans la liste de candidats d'acquisition (22) sur la base de l'état courant (56), des connaissances (52) destinées à analyser une cause d'erreur et des connaissances (53) destinées à déduire des candidats d'acquisition,
classer (3030) les candidats d'acquisition déduits en incluant les étapes consistant à attribuer des candidats d'acquisition qui satisfont aux conditions d'acquisition (57) à la liste de candidats d'acquisition satisfaisant à des conditions (23), attribuer des candidats d'acquisition qui ne sont pas inclus dans les connaissances d'objet des conditions d'acquisition à la liste de candidats d'acquisition d'éléments non-incorporés (25) et attribuer des candidats d'acquisition qui ont des valeurs d'acquisition situées à l'extérieur de la plage spécifiée par les conditions d'acquisition (57) à la liste de candidats d'acquisition se trouvant à l'extérieur d'une plage (24),
modifier (3040) les conditions d'acquisition sur la base de ladite liste de candidats d'acquisition non-incorporés (25) et de ladite liste de candidats d'acquisition se trouvant à l'extérieur d'une plage (24), si la liste de candidats d'acquisition satisfaisant à des conditions (23) est vide, et
éditer (3050) le plan d'acquisition sur la base de la liste de candidats d'acquisition satisfaisant à des conditions (57).

7. Procédé selon la revendication 6, dans lequel, lorsque la liste de candidats d'acquisition satisfaisant à des conditions (23) inclut deux candidats d'acquisition, l'étape d'édition (3050) comporte une étape consistant à sélectionner l'un de ces candidats d'acquisition sur la base des connaissances (55) destinées à éditer un plan d'acquisition.

8. Procédé selon la revendication 6 ou 7, dans lequel ladite étape de déduction inclut en outre les étapes consistant à déduire (3040), lorsque aucun des candidats d'acquisition ne satisfait aux conditions d'acquisition (57), des candidats d'acquisition à partir de ladite liste de candidats d'acquisition d'éléments non-incorporés (25) et de ladite liste de candidats d'acquisition se trouvant à l'extérieur d'une plage (24) sur la base des connaissances (54) destinées à modifier des conditions d'acquisition, classer les candidats d'acquisition déduits dans une liste de candidats alternative de conditions d'acquisition (26) et créer un plan en variante de conditions d'acquisition (27) sur la base de la liste de candidats alternative de conditions d'acquisition.

9. Procédé selon l'une quelconque des revendications 1 à 8, concernant une prédiction d'un contrôle de trafic ferroviaire dans lequel ledit état courant représente l'état d'un enregistrement réel d'un train suivant une trajectoire.

10. Système d'acquisition pour obtenir un plan d'acquisition satisfaisant afin de modifier des connaissances d'objet de manière à résoudre au moins un problème parmi des problèmes de prédiction, des problèmes de planification, et des problèmes de replanification, comportant des moyens de mémorisation (2) et un processeur d'acquisition (4), ledit processeur d'acquisition incluant
des moyens (40, 41) pour obtenir et mémoriser dans lesdits moyens de mémorisation un état courant (56) incluant des informations d'erreur de prédiction,
des moyens (40, 42) pour déduire et mémoriser dans lesdits moyens de mémorisation une liste de candidats d'acquisition sur la base de méta-connaissances (51) mémorisées dans lesdits moyens de mémorisation, lesdites méta-connaissances incluant des spécifications de conditions concernant lesdites connaissances d'objet et sur la base de l'état courant, et
des moyens (40, 43) pour évaluer ladite liste de candidats d'acquisition déduite sur la base de conditions d'acquisition préalablement mémorisées (57) afin de déterminer des candidats d'acquisition de ladite liste de candidats d'acquisition dont les éléments et les valeurs d'acquisition satisfont auxdites conditions d'acquisition de sorte qu'un plan d'acquisition est obtenu,
lesdits moyens de déduction et d'évaluation répètant leurs traitements jusqu'à ce que ledit plan d'acquisition satisfaisant soit obtenu.

11. Système selon la revendication 10, dans lequel lesdits moyens de déduction (40, 42) comportent en outre des moyens pour déduire un plan d'acquisition alternatif en modifiant les conditions d'acquisition préalablement mémorisées afin de déduire des conditions d'acquisition alternatives si aucun des candidats d'acquisition du plan d'acquisition ne satisfait aux conditions d'acquisition.
